Europäisches Patentamt

European Patent Office

Office européen des brevets

(19)

(11) Publication number: **0 079 748**
**B1**

(12) **EUROPEAN PATENT SPECIFICATION**

(45) Date of publication of patent specification: **23.04.86**

(51) Int. Cl.⁴: **G 11 B 5/584, H 04 N 5/783**

(21) Application number: **82305955.5**

(22) Date of filing: **09.11.82**

(54) **Video tape recorder tracking system.**

(30) Priority: **09.11.81 JP 179470/81**

(43) Date of publication of application:
**25.05.83 Bulletin 83/21**

(45) Publication of the grant of the patent:
**23.04.86 Bulletin 86/17**

(84) Designated Contracting States:
**DE FR GB**

(56) References cited:
**EP-A-0 032 834**
**DE-A-2 741 217**
**DE-A-2 846 255**
**DE-A-3 030 981**

(73) Proprietor: **Matsushita Electric Industrial Co.,
Ltd.
1006, Oaza Kadoma
Kadoma-shi Osaka-fu, 571 (JP)**

(72) Inventor: **Kobayashi, Masaaki
1-17-2, Uguisudai
Kawanishi-shi Hyogo-ken (JP)**
Inventor: **Tomita, Masao
Higashi-2-102, 271-2 Uchiage
Neyagawa-shi Osaka-fu 572 (JP)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

This invention generally relates to an automatic tracking system which is employed in a video tape recorder/reproducer.

Recently an automatic tracking system has been introduced for a video tape recorder/reproducer. Such a system makes possible the proper tracking of the video tracks recorded on a video tape, reproducing pictures without noise bands regardless of tape speed or the mode of operation (for example, slow motion mode, still motion mode, quick motion mode, reverse motion mode, etc.). In the conventional automatic tracking system, video heads are mounted on head actuators which are electrical level-mechanical position converters. Each of the head actuators is moved by a dither signal from an oscillator and tracking error signals are detected from the envelope of reproduced signals. According to the resultant tracking error signal, a negative feedback loop controls the head actuators so that the video head properly follows the recorded track.

An automatic tracking system for a video tape recorder is disclosed in DE—A—3,030,981 and comprises at least one rotary video head arranged to be driven by a head actuator transversely of tracks on a video tape so that the head traces the tracks. The tape is driven at M/N times the speed of the recording tape speed and a phase lock loop is used to lock a control signal representative of the position of the video tape to a reference.

We have found that when the automatic system described above employs bimorph type piezoelectric elements as the head actuators, the average voltage applied to the head actuators should be zero or near zero voltage if the life time of the head actuators is not to be short. We have also found that irrespective of the type of head actuators used, the average voltage applied to the head actuators should be zero or near zero voltage in order to obtain good contact between the video heads and the video tape.

The present invention provides a tracking system for a video recorder/reproducer employing a video tape having tracks for recording video signals, said system comprising: at least one rotary video head for reproducing video signals recorded on said video tape in slanted tracks, a head actuator being arranged to drive said head transversely to said tracks so that the head traces said tracks, video tape driving means for driving said video tape at M/N times the speed of the recording tape speed, and a phase lock loop for phase locking a control signal (c) representative of the position of the video tape to a reference, characterised in that smoothing means are provided for producing an output signal by averaging the driving signal of said head actuator, and there is a delay circuit in the phase lock loop response to said output signal for adjusting the phase of the control signal (c) in order to decrease the level of said output signal.

An advantage of this system is that the average voltage applied to the head actuators is controlled to be zero or near zero voltage, thus extending the life of bimorph type head actuators or improving the condition of video head contact with a video tape.

Features and advantages of the present invention will become more apparent from the following description of an embodiment thereof when taken in conjunction with the accompanying drawings, in which:—

Figure 1 is a block diagram of an embodiment of a video tape recorder/reproducer using a tracking system according to this invention;

Figure 2 is a reproduction of a recorded track pattern of a magnetic tape;

Figures 3 (a)—(f) illustrate signals appearing at various points of the tracking system shown in Figure 1; and

Figures 4 (a)—(g) illustrate further signals appearing at various points of the tracking system shown in Figure 1.

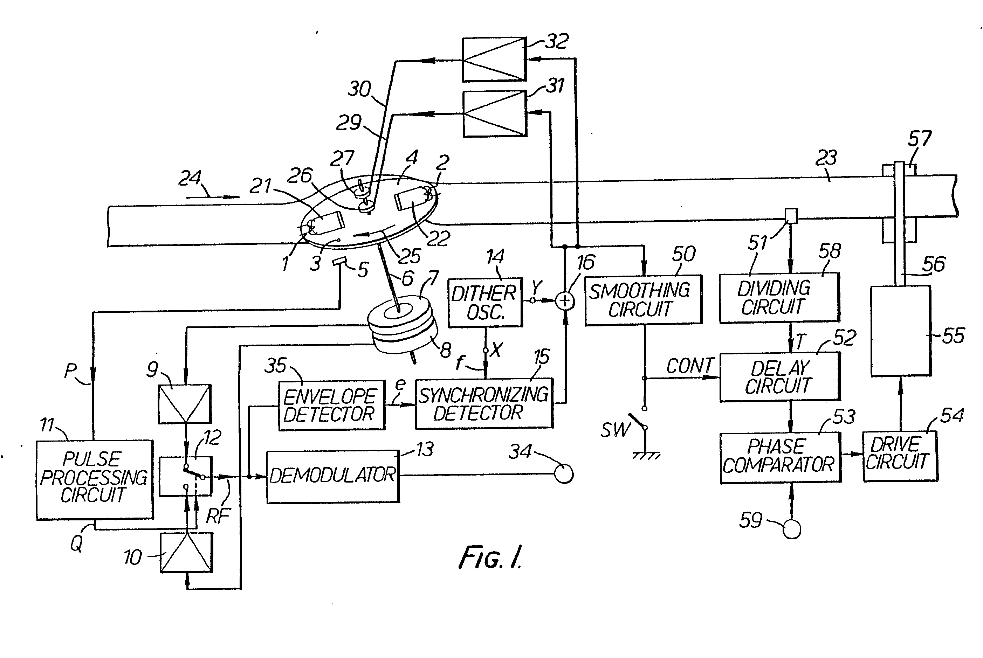

Figure 1 shows a construction of a video tape recorder (in the reproducing mode) using a tracking apparatus of this invention. Video heads 1 and 2 have the same azimuth angle (for example, 6°) and are mounted at the free ends of head actuators 21 and 22 (for example, bimorph type piezoelectric elements). The other ends of actuators 21 and 22 are fixed to a rotary disk 4 mounted on a shaft 6. A magnet 3 for indicating the rotating phase of the video heads 1 and 2 is attached to the rotary disk 4 and rotating phase detector 5, which is magnetically coupled to the magnet 3, is mounted in a stationary position adjacent the path of movement of the disk. The rotary disk 4 is driven by a DC motor (not shown) in a direction indicated by the arrow 25 and is provided with a conventional phase controlling means. A video tape 23 is driven by a capstan 56 and a pinch-roller 57 in a direction indicated by the arrow 24.

Reproduced signals from the video head 1 and 2 are applied to amplifiers 9, 10 through rotary transformers 7, 8. Output signals from the amplifiers 9, 10 are applied to a switching circuit 12. Output signals from the switching circuit 12 are applied to a demodulator 13, and thence to a video output 34 as well as to a synchronising detector 15 via an envelope detector 35. An output signal of the rotating phase detector 5 is processed by a pulse signal processor 11 and controls the operation of the switching circuit 12. The synchronising detector 15 is supplied with an output signal from a terminal X of a dither signal oscillator 14 which also produces further output signal from a terminal T which is connected to an adder 16 for addition to the output of the detector 15. The output from the adder 16 is fed to high-voltage amplifiers 31, 32 in order to produce amplified signals for application to the head actuators 21, 22 through conductive brushes 29, 30 and slip rings 26, 27.

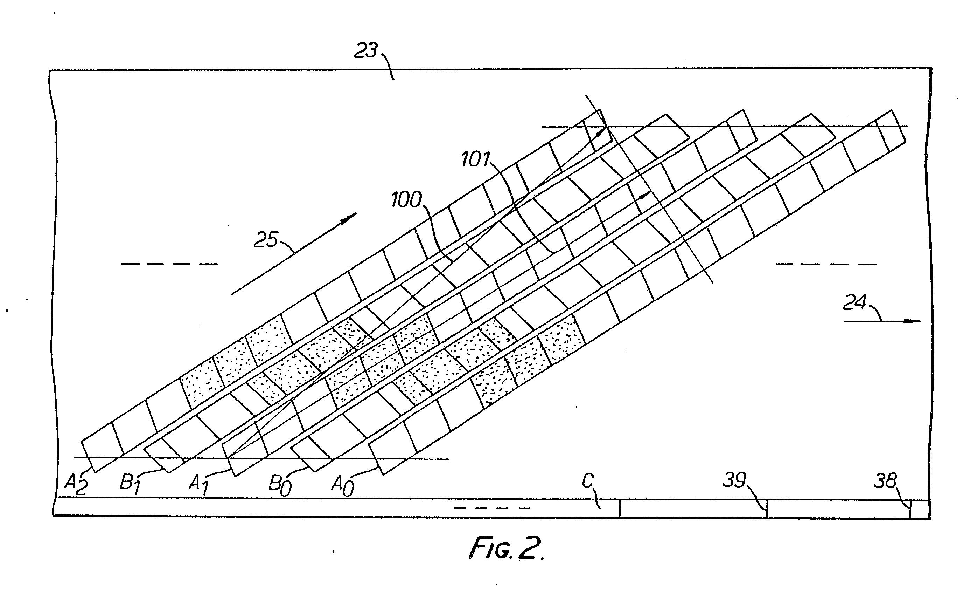

The output from the adder 16 is also applied to a CONT terminal of a delay circuit 52 through a smoothing circuit 50. The CONT terminal can be connected to ground by switch SW. A circuit head 51 is set to scan a control track C (Figure 2) of the video tape 23 and the thereby reproduced signal is applied to a terminal T of the delay circuit 52 through a dividing circuit 58. An output signal of the delay circuit 52 is applied to a capstan motor 55 through a phase comparator 53 and a drive circuit 54. A capstan 56 is connected to the capstan motor 55 and co-operates with a pinch-roller 57 to directly drive the video tape 23.

Figure 2 shows video track patterns recorded on the videotape 23. $A_0$, $B_0$, $A_1$, $B_1$ and $A_2$ are tracks containing video signals each representing one field of video: the $A_0$, $A_1$, and $A_2$ tracks are recorded by one video head whose azimuth is $+6°$; and the $B_0$ and $B_1$ tracks are recorded by another video head whose azimuth is $-6°$. Slant lines of each tracks indicate recording positions of horizontal sync signals. Dotted parts indicate recording positions of vertical sync signals. A longitudinally extending control track C is provided along one edge of the tape. The control signals, which represent the recording phase of the video signals, are recorded on the control track C at the rate of one control signal for every one picture frame. In the recording process, the recording starting timing of $A_0$ track and the recording timing of control signal 38 are same timing. The starting point of $A_1$ track and the control signal 39 are recorded at the same time.

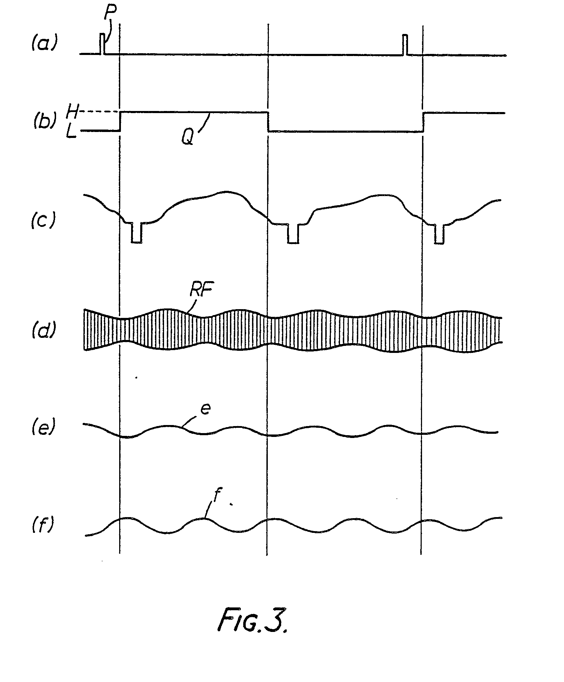

Rotating phases of the video heads 1, 2 are detected by the combination of the magnet 3 and the rotary phase detector 5. A pulse signal P which is output signal of the detector 5 in Figure 3(a). For example, the pulse processing circuit 11 contains three stages of mono-stable mutivibrators (not shown). The pulse processing circuit 11 can generate the signal Q shown in Figure 3(b). It is assumed that the rising edge of the signal Q coincides with the start of the scanning of a track by the video head 1 and the falling edge of the signal Q coincides with the start of scanning a track by the video head 2. It is assumed that the switching circuit 12 passes the output of the amplifier 9 to the envelope detector 35 and demodulator 18 when the signal Q is high and the switching circuit 12 passes the output of the amplifier 10 to the envelope detector 35 and the demodulator 13 when the signal Q is low level. In this way, the signals reproduced by the video head 1, 2 are converted to one channel signals (RF) by the switching circuit 12. The demodulator 13 demodulates the channel signal to a video signal shown in Figure 3(c) which is output from the output terminal 34.

The one channel signal (RF) shown in Figure 3(d) is also applied to the envelope detector 35. For example, the envelope detector 35 is made-up by a conventional diode detector (not shown). The output terminal of the envelope detector 35 supplies a signal $e$, which is the envelope of the one channel signal (RF) shown in Figure 3(e). The sychronized detector 15 is supplied with the signal $e$ and a signal $f$ which is the output signal from the terminal X of the dither signal oscillator 14, shown in Figure 3(f). When the video head 1 scans the video track $A_1$ as a desired track, if the video.head 1 shifts to upper side, the synchronizing detector 15 outputs a negative voltage to correct the scanning position. If the video head 1 shifts to lower side, the synchronizing detector 15 outputs a positive voltage to correct the scanning position. If the video head 1 correctly scans the video track 1, the synchronizing detector 15 outputs zero voltage. The correcting signal and the dither signal which is supplied from the terminal Y of the dither signal oscillator 14 are added by the adder 16. The phase of the dither signal supplied from the terminal Y is the same as the phase of the dither signal supplied from the terminal X of the dither signal oscillator 14. The output signal from the adder 16 is applied to the head actuators 21, 22 through the high-voltage amplifiers 31, 32 conductive brushes 29, 30 and slip rings 26, 27.

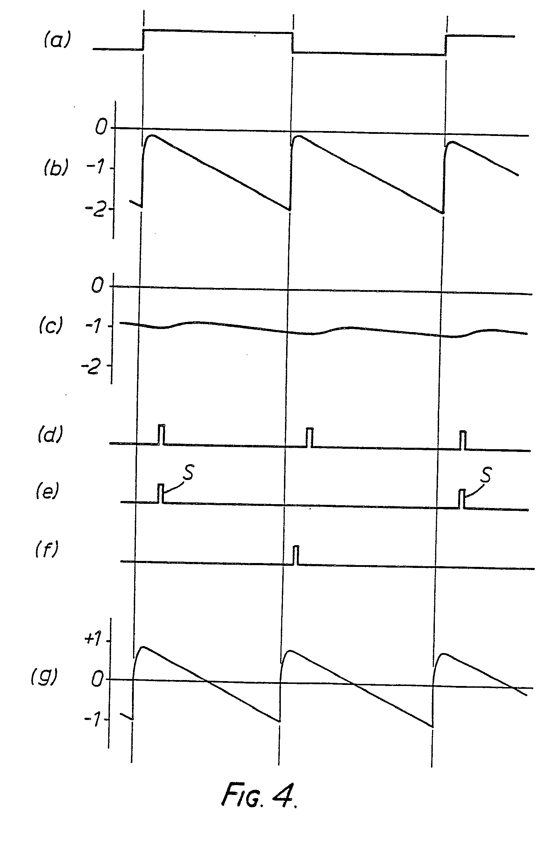

As the result, the scanning position of the video head 1 is controlled by a negative feedback loop so as to correctly scan the desired track $A_1$. The negative feedback loop is one example of an auto tracking loop. Using such a negative feedback loop, the video heads 1, 2 can scan video tracks on track when the video tape 23 is driven at twice recording tape speed. At this tape speed, the scanning locus of the video head 1 when a control voltage is not supplied to the head actuator 21 is shown by the arrow 100 in Figure 2 and the scanning locus of the video head 1 under to.effect of the negative feedback is shown by the arrow 101 in Figure 2. Since the dither signal level is low level, the arrow 101 is shown by a straight line. The difference between the arrow 101 and the arrow 102 shows that the applied voltage to the head actuator 21 is zero volts at the start of the field and the applied voltage to the head actuator 21 corresponds to $-2$ pitches converting video track pitches at the end timing of the field. Figure 4(b) shows a signal which is applied to the head actuator 21, 22, and is called a scanning position modifying signal. Figure 4(a) is the signal Q which is shown in Figure 3(b). Divisions of the scale shown in Figure 4(b) indicate pitch number of the video track. The smoothing circuit 50 smoothes the scanning position modifying signal to produce the smoothed signal shown in Figure 4(c). Division of the scale shown in Figure 4(c) indicate pitch number of the video track. The smoothed signal level corresponds to $-1$ pitch.

Initially, as the switch SW is closed, a signal whose voltage is zero is applied to the CONT terminal of the delay circuit 52. The delay circuit 52 contains a mono-stable multivibrator (not shown) whose delay time can be controlled by a control signal and a level shift circuit (not shown). The level shift circuit converts the level of the signal which is applied to the CONT terminal.

The control signal reproduced by the control head 51 is divided in proportion to tape speed by the divider 58. The divided control signal is applied to the terminal T of the delay circuit 52. When the tape speed is twice recording speed the divider 58 divides the control signals by 2. Figure 4(d) shows an example of the control signals at twice recording tape speed. Figures 4(e) shows a pulse signal S which is the output signal of the divider 58. The pulse signal S is delayed by the delay circuit 52 in proportion to the signal level input to the CONT terminal. Now, initially the input level of the CONT terminal is zero voltage, and thus the pulse signal S occurs almost simultaneously with the pulses from the head 51. The delayed pulse signal S is applied to the phase comparator 53 and a phase reference signal from an input 59 is applied to the phase comparator 53, too. The frequency of the phase reference signal is field frequency which in NTSC is about 30Hz. The phase comparator 53 of the capstan servo circuit is conventional. An output signal of the phase comparator 53 is applied to the capstan motor 55 through the drive circuit 54. In this way, a conventional capstan locked loop is made at the beginning and the phase of the reproduced control signals under the present condition is shown in Figure 4(d). The scanning position modifying signal under the present condition is shown in Figure 4(b), which includes a DC signal level. After the capstan phase locked loop is completed, the switch SW is open circuited and the signal shown in Figure 4(c) is applied to the CONT terminal of the delay circuit 52. The capstan phase locked loop comprises a negative feedback loop to the signal level of the CONT terminal. In this way, the capstan phase locked loop brings the smoothed signal level towards zero voltage. The output signal of the divider 58 under these conditions is shown in Figure 4(f) with the resultant scanning position modifying signal shown in Figure 4(g). The average signal level which is applied to the head actuator 21 or 22 is thus made nearly zero volts. Consequently, the life of bimorph type piezoelectric elements is longer, assuming that the head actuators 21, 22 use the bimorph type piezoelectric elements. Also, head/tape contact is improved if the average signal level is nearly equal zero level, irrespective of the kind of head actuator.

While the above-mentioned auto-tracking loop employs a dither signal, use of any other method of auto-tracking has the same effects. In a first alternative a video head is moved fixed distance. As the level of the reproduced signal increases, the video head is moved in one direction by the same distance. As the level of the reproduced signal decreases, the video head is moved in the reverse direction again by the same distance. In a second example, pilot signals for auto-tracking are recorded with the video signal. On reproducing mode, an auto-tracking loop uses the pilot signals.

The above mentioned reproduction tape speed is twice the recording tape speed, but at M times tape speed (M is an arbitrary non-zero integer) this system is realised and the same effects are obtained. Moreover, as a capstan phase locked loop can be locked at 1/N times tape speed (N is an arbitrary non-zero integer) this system can be realised and the same effects are obtained. That is to say, this system can be realised at M/N times recording tape speed. It is desired that the time constant of the smoothing circuit 50 is longer than for the time constant of the capstan servo circuit. For example, the time constant of the smoothing circuit is several seconds.

This system controls the phase of the modified control signal. On the other hand, a negative feedback loop which controls the phase of the phase reference signal can be realised too, and has the same effects.

## Claims

1. A tracking system for a video recorder/reproducer employing a video tape (23) having tracks for recording video signals, said system comprising:

at least one rotary video head (1, 2) for reproducing video signals recorded on said video tape (23) in slanted tracks,

a head actuator (21, 22) being arranged to drive said head transversely to said tracks so that the head traces said tracks,

video tape driving means (54—57) for driving said video tape at M/N times the speed of the recording tape speed, and

a phase lock loop (58—59, 52) for phase locking a control signal (51c in Figure 2) representative of the position of the video tape to a reference (59), characterised in that smoothing means (50) are provided for producing an output signal by averaging the driving signal of said actuator, and that there is a delay circuit (52) in the phase lock loop responsive to said output signal for adjusting the phase of the control signal in order to decrease the level of said output signal.

2. A tracking system as claimed in claim 1, and comprising means (SW) for inhibiting said output signal for a prescribed period after a change in tape speed.

3. A tracking system as claimed in claim 3, wherein said output signal is inhibited while said video driving means is setting up the phase locked loop.

4. A tracking system as claimed in claim 1, 2 or 3 wherein a bimorph type piezoelectric element is used as said head actuator.

## Patentansprüche

1. Spurverfolgungssystem für ein Videoaufnahme/Wiedergabe-Gerät, das ein Videoband (23) verwendet, das Spuren zur Aufzeichnung von Videosignalen aufweist, das System enthaltend:

wenigstens einen rotierenden Videokopf (1, 2) zum Wiedergeben von auf dem Videoband (23) in schrägen Spuren aufgezeichneten Videosignalen,

einen Kopfantrieb (21, 22), der dazu eingerichtet ist, den Kopf quer zu den Spuren zu bewegen, so daß der Kopf die Spuren verfolgt.

eine Videobandantriebseinrichtung (54—57) zum Antreiben des Videobandes mit der M/Nfachen Geschwindigkeit der Bandgeschwindigkeit

bei der Aufnahme, und

eine Phasenverriegelungsschleife (58—59, 52) zur Phasenverriegelung eines Steuersignals (51, C in Fig. 2), das für die Lage des Videobandes zu einem Bezug (59) repräsentativ ist, dadurch gekennzeichnet, daß Glättungseinrichtung (50) vorgesehen sind, um ein Ausgangssignal durch Mittelwertbildung des Antriebssignals des Kopfantriebes zu erzeugen, und daß ein Verzögerungskreis (52) in der Phasenverriegelungsschleife vorgesehen ist, der auf das genannte Ausgangssignal anspricht, um die Phase des Steuersignals einzustellen, um den Pegel des genannten Ausgangssignals zu vermindern.

2. Spurverfolgungssystem nach Anspruch 1, enthaltend Einrichtungen (SW) zum Unterdrücken des Ausgangssignals für eine vorbestimmte Zeitdauer nach einer Änderung der Bandgeschwindigkeit.

3. Spurverfolgungssystem nach Anspruch 2, bei dem das genannte Ausgangsignal unterdrückt wird, während die Videobandantriebseinrichtung die Phasenverriegelungsschleife einrichtet.

4. Spurverfolgungssystem nach Anspruch 1, 2 oder 3, bei dem ein piezoelectrisches Element vom bimorphen Typ als der genannte Kopfantrieb verwendet ist.

**Revendications**

1. Système de suivi pour un magnétoscope mettant en oeuvre une bande magnétoscopique (23) comportant des pistes pour enregistrer des signaux vidéo, le système comprenant:
au moins une tête vidéo tournante (1, 2) pour reproduire des signaux vidéo enregistrés sur la bande magnétoscopique (23) dans des pistes inclinées,

un actionneur de tête (21, 22) étant agencé pour entraîner la tête transversalement par rapport aux pistes de sorte que la tête suive les pistes,

un moyen d'entraînement de bande magnétoscopique (54—57) pour entraîner la bande magnétoscopique à une vitesse égale à M/N fois la vitesse de bande d'enregistrement, et

une boucle à blocage de phase (58—59, 52) pour bloquer la phase d'un signal de contrôle (51, c sur la Figure 2) représentant la position de la bande magnétoscopique par rapport par à une position de référence (59), caractérisé en ce qu'un moyen de filtrage (50) est prévu pour produire un signal de sortie en formant la moyenne du signal d'entraînement de l'actionneur de tête, et en ce qu'un circuit à retard (52) est prévu dans la boucle à blocage de phase qui est sensible au signal de sortie pour régler la phase du signal de contrôle afin de diminuer le niveau du signal de sortie.

2. Système de suivi selon la revendication 1, comprenant un moyen (SW) pour interdire le signal de sortie pendant une période imposée après un changement de vitesse de bande.

3. Système de suivi selon la revendication 2, dans lequel le signal de sortie est interdit pendant que le moyen d'entraînement de bande magnétoscopique est en train d'établir la boucle à blocage de phase.

4. Système de suivi selon l'une quelconque de revendications 1 à 3, dans lequel un élément piézoélectrique du type bimorphe est utilisé comme actionneur de tête.

*Fig. 1.*

0 079 748

FIG. 2.

0 079 748

FIG.3.

FIG. 4.

4